# EUROPEAN PATENT APPLICATION

(11) **EP 4 440 081 A1**
(43) Date of publication of application: **02.10.2024**
(21) Application number: 22897692.4
(22) Date of filing: 17.11.2022
(51) Int. Cl.: H04L 67/141, H04W 76/10

(54) **SESSION ESTABLISHMENT METHOD AND APPARATUS FOR INTERNET OF THINGS DEVICE**

(30) Priority: 23.11.2021 CN 202111398304; 10.12.2021 CN 202111510606
(71) Applicant: VIVO MOBILE COMMUNICATION CO., LTD., Dongguan, Guangdong 523863 (CN)
(72) Inventor: LI, Huan, Dongguan, Guangdong 523863 (CN)
(74) Representative: Murgitroyd & Company
(86) International application number: PCT/CN2022/132538
(87) International publication number: WO 2023/093609

(57) **Abstract**

This application discloses a session establishment method and apparatus for an Internet of Things device, pertaining to the field of wireless communication technologies. The session establishment method for an Internet of Things device according to an embodiment of this application includes: obtaining, by a terminal, an Internet of Things device group policy, where the Internet of Things device group policy indicates the terminal to establish a session channel on a per Internet of Things device group basis; and establishing, by the terminal according to the Internet of Things device group policy, a target session channel for a target Internet of Things device going to access the terminal.

## Description

### CROSS-REFERENCE TO RELATED APPLICATIONS

This application claims priority to Chinese Patent Application No. 202111398304.4, filed on November 23, 2021, and to Chinese Patent Application No. 202111510606.6, filed on December 10, 2021 which are incorporated herein by reference in their entireties.

### TECHNICAL FIELD

This application pertains to the field of wireless communication technologies, and specifically relates to a session establishment method and apparatus for an Internet of Things device.

### BACKGROUND

Communication systems (for example, 5^{th}-generation (5th Generation, 5G) communication systems) can provide data channels between terminals and data networks, allowing terminals to access services in the data networks through the data channels. The data channel between the terminal and the data network can be for protocol data unit (Protocol Data Unit, PDU) sessions, or can be for Internet protocol (Internet Protocol, IP) streams. Data networks can be identified by data network names (Data Network Names, DNN). PDU sessions can be associated with a DNN, that is, the terminal can access a data network identified by the DNN, through the PDU session. PDU sessions can also be associated with a network slice (which can be identified using single-network slice selection assistance information (Single-Network Slice Selection Assistance Information, S-NSSAI)), that is, the terminal or user equipment (User Equipment, UE) can access the network slice or use the resources provided by the network slice, through the PDU session.

Internet of Things terminals generally refer to terminal devices used for certain specific scenarios or specific services, such as smart home devices, smart city devices, smart utilities, electronic health devices, and smart wearable devices. In some cases, Internet of Things devices need to access communication networks to access services in data networks. Therefore, it is necessary to establish data channels for Internet of Things devices. According to related technologies, it is necessary to establish an independent session channel for each Internet of Things device, which sometimes cannot effectively utilize resources of the communication network, causing resource waste.

### SUMMARY

Embodiments of this application provide a session establishment method and apparatus for an Internet of Things device to establish, according to an Internet of Things device group policy, a session channel for an Internet of Things device going to access a terminal, which can effectively utilize resources of the communication network, avoiding resource waste.

According to a first aspect, a session establishment method for an Internet of Things device is provided, including: obtaining, by a terminal, an Internet of Things device group policy, where the Internet of Things device group policy instructs the terminal to establish a session channel on a per Internet of Things device group basis; and establishing, by the terminal according to the Internet of Things device group policy, a target session channel for a target Internet of Things device going to access the terminal.

According to a second aspect, a session establishment apparatus for an Internet of Things device is provided, which is applied to a terminal, where the apparatus includes: a first obtaining module configured to obtain an Internet of Things device group policy, where the Internet of Things device group policy instructs the terminal to establish a session channel on a per Internet of Things device group basis; and an establishment module configured to establish, according to the Internet of Things device group policy, a target session channel for a target Internet of Things device going to access the terminal.

According to a third aspect, a session establishment method for an Internet of Things device is provided, including: obtaining, a first network-side device, a first Internet of Things device group policy, where the first Internet of Things device group policy indicates that a session channel is established on a per Internet of Things device group basis; and sending, by the first network-side device according to the first Internet of Things device group policy, a second Internet of Things device group policy to a terminal, where the terminal has an Internet of Things device access capability, and the second Internet of Things device group policy instructs the terminal to establish a target session channel for a target Internet of Things device going to access the terminal, on a per Internet of Things device group basis.

According to a fourth aspect, a session establishment apparatus for an Internet of Things device is provided, which is applied to a first network-side device, where the apparatus includes: a second obtaining module configured to obtain a first Internet of Things device group policy, where the first Internet of Things device group policy indicates that a session channel is established on a per Internet of Things device group basis; a second sending module configured to send a second Internet of Things device group policy to a terminal according to the first Internet of Things device group policy, where the terminal has an Internet of Things device access capability, and the second Internet of Things device group policy indicates the terminal to establish a target session channel for a target Internet of Things device going to access the terminal, on a per Internet of Things device group basis.

According to a fifth aspect, a session establishment method for an Internet of Things device is provided, including: receiving, by a second network-side device, Internet of Things device access capability information from a first network-side device, where the Internet of Things device access capability information is used to indicate that the terminal is capable of accesing an Internet of Things device to a communication network; sending, by the second network-side device, an Internet of Things device group policy to the first network-side device, where the Internet of Things device group policy indicates the terminal to establish a session channel on a per Internet of Things device group basis.

According to a sixth aspect, a session establishment apparatus for an Internet of Things device is provided, which is applied to a second network-side device, where the apparatus includes: a receiving module configured to receive a request for obtaining an Internet of Things device group policy from a first network-side device; and a third sending module configured to send a first Internet of Things device group policy to the first network-side device, where the first Internet of Things device group policy indicates that a session channel is established on a per Internet of Things device group basis.

According to a seventh aspect, a terminal is provided. The terminal includes a processor and a memory, where the memory stores a program or instructions executable on the processor, and when the program or instructions are executed by the processor, the steps of the method according to the first aspect are implemented.

According to an eighth aspect, a terminal is provided, including a processor and a communication interface, where the processor is configured to implement the steps of the method according to the first aspect, and the communication interface is configured to communicate with the network-side device.

According to a ninth aspect, a network-side device is provided. The network-side device includes a processor and a memory, where the memory stores a program or instructions executable on the processor, and when the program or instructions are executed by the processor, the steps of the method according to the third aspect are implemented, or the steps of the method according to the fifth aspect are implemented.

According to a tenth aspect, a network-side device is provided, including a processor and a communication interface, where the processor is configured to implement the steps of the method according to the third aspect or the steps of the method according to the fifth aspect, and the communication interface is configured to communicate with the terminal.

According to an eleventh aspect, a readable storage medium is provided. The readable storage medium stores a program or instructions, and when the program or the instructions are executed by a processor, the steps of the method according to the first aspect are implemented, the steps of the method according to the third aspect are implemented, or the steps of the method according to the fifth aspect are implemented.

According to a twelfth aspect, a chip is provided. The chip includes a processor and a communication interface, the communication interface is coupled to the processor, and the processor is configured to run a program or instructions to implement the steps of the method according to the first aspect, the steps of the method according to the third aspect, or the steps of the method according to the fifth aspect.

According to a thirteenth aspect, a computer program/program product is provided. The computer program/program product is stored in a storage medium, and the computer program/program product is executed by at least one processor to implement the steps of the method according to the first aspect, the steps of the method according to the third aspect, or the steps of the method according to the fifth aspect.

In the embodiments of this application, a terminal establishes a session channel for an Internet of Things device going to access the terminal, according to an Internet of Things device group policy on a per an Internet of Things device group basis, which can effectively utilize resources of the communication network, avoiding resource waste.

### BRIEF DESCRIPTION OF DRAWINGS

FIG. 1 is a schematic diagram of a wireless communication system to which embodiments of this application are applicable.
FIG. 2 is a schematic flowchart of a session establishment method for an Internet of Things device according to an embodiment of this application;
FIG. 3 is another schematic flowchart of a session establishment method for an Internet of Things device according to an embodiment of this application;
FIG. 4 is another schematic flowchart of a session establishment method for an Internet of Things device according to an embodiment of this application;
FIG. 5 is another schematic flowchart of a session establishment method for an Internet of Things device according to an embodiment of this application;
FIG. 6 is another schematic flowchart of a session establishment method for an Internet of Things device according to an embodiment of this application;
FIG. 7 is a schematic structural diagram of a session establishment apparatus for an Internet of Things device according to an embodiment of this application;
FIG. 8 is another schematic structural diagram of a session establishment apparatus for an Internet of Things device according to an embodiment of this application;
FIG. 9 is another schematic structural diagram of a session establishment apparatus for an Internet of Things device according to an embodiment of this application;
FIG. 10 is a schematic structural diagram of a communication device according to an embodiment of this application;
FIG. 11 is a schematic diagram of a hardware structure of a terminal according to an embodiment of this application; and
FIG. 12 is a schematic diagram of a hardware structure of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), a next generation (NextGeneration, NG) system, and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

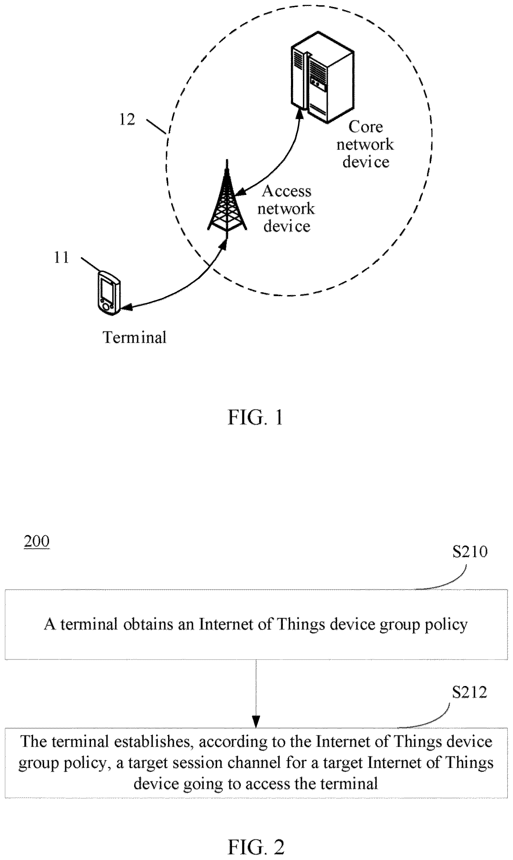

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the terminal 11 is not limited to any specific type in the embodiments of this application. The network-side device 12 can include an access network device and/or core network device, where the access network device 12 can also be referred to as a radio access network device, radio access network (Radio Access Network, RAN), radio access network function, or radio access network unit. The access network device 12 can include base stations, wireless local area network (Wireless Local Area Network, WLAN) access points, wireless fidelity (Wireless Fidelity, WiFi) nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmission and reception point (Transmitting Receiving Point, TRP), or other appropriate terms in the field. As long as the same technical effects are achieved, the base station is not limited to any specific technical terminology. It should be noted that in the embodiments of this application, only the base station in the NR system is introduced as an example, and the specific type of the base station is not limited. The core network device can also be referred to as a core network node or core network function and may include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), application function (Application Function, AF), policy control function (Policy Control Function, PCF), and the like. It should be noted that in the embodiments of this application, only the core network device in the NR system is introduced as an example, and the specific type of the core network device is not limited. It is worth noting that the functions of the core network devices can be realized by multiple devices collectively, or the functions of multiple core network devices can be implemented by a single device, which is not limited in the embodiments of this application. In the embodiments of the application, if the functions of multiple core network devices are implemented by a single device, then the interactions between these multiple core network devices in the embodiments of this application are internal operations of that device.

An Internet of Things device needs to access a communication network to avail services within a data network. According to related art, a terminal going to access to Internet of Things devices needs to establish independent session channels for each Internet of Things device. However, many Internet of Things devices are only used for specific scenarios or specific services, and the amount of data they exchange with the network each time is relatively small, or the interval between two interactions is long. Establishing an independent session channel for each Internet of Things device can sometimes lead to ineffective utilization of communication network resources. Moreover, given the vast number of Internet of Things devices, establishing an independent session channel for each device could also result in resource waste. Therefore, in the embodiments of this application, a terminal establishes a session channel for an Internet of Things device going to access the terminal, according to an Internet of Things device group policy on a per an Internet of Things device group basis, which can effectively utilize resources of the communication network, avoiding resource waste.

The following describes in detail a session establishment solution for an Internet of Things device provided in the embodiments of this application through some embodiments and application scenarios thereof with reference to the accompanying drawings.

It should be noted that in the embodiments of this application, the session channel includes but is not limited to a PDU session channel, and the Internet of Things devices include but are not limited to passive (Passive) Internet of Things (Internet of Things, IoT) devices.

FIG. 2 is a schematic flowchart of a session establishment method for an Internet of Things device according to an embodiment of this application. The method 200 can be executed by a terminal. In other words, the method can be executed by software or hardware installed on the terminal. As shown in FIG. 2, the method may include the following steps.

S210. A terminal obtains an Internet of Things device group policy, where the Internet of Things device group policy indicates the terminal to establish a session channel on a per Internet of Things device group basis.

In the embodiment of this application, the Internet of Things device group policy is used to describe how the terminal establishes session channels for Internet of Things devices.

In the embodiment of this application, the Internet of Things device group policy indicates the terminal to establish a session channel on a per Internet of Things device group basis, and Internet of Things devices belonging to a same group share one session channel. That is, during establishment a session channel for an Internet of Things device group, the terminal establishes one session channel for one or more Internet of Things devices belonging to a same group.

In the embodiment of this application, a terminal having an Internet of Things device access capability can configure the Internet of Things device group policy or obtain the Internet of Things device group policy from a network-side device. For example, the operator or enterprise to which the terminal belongs configures the Internet of Things device group policy for the terminal, or the terminal obtains the Internet of Things device group policy from an AMF and/or SMF.

In a possible implementation, before the terminal obtains the Internet of Things device group policy from the network-side device, the terminal sends Internet of Things device access capability information to the network-side device, where the Internet of Things device access capability information is used to indicate that the terminal is capable of accesing an Internet of Things device to a communication network. In this possible implementation, after obtaining an Internet of Things device access capability of the terminal, the network-side device sends the Internet of Things device group policy to the terminal. For example, the terminal can have the Internet of Things device access capability information carried in a registration request message sent to the network-side device; or the terminal can have the Internet of Things device access capability information carried in a session establishment request sent to the network-side device.

In another possible implementation, the network-side device obtains the Internet of Things device access capability information of the terminal. For example, the Internet of Things device access capability information of the terminal is stored in subscription data of the terminal. The network-side device obtains the Internet of Things device access capability information of the terminal from the subscription data of the terminal based on the identifier of the terminal.

In the above possible implementations, the Internet of Things device access capability information includes at least one of the following:
(1) a type of Internet of Things device supported by the terminal;
(2) an identifier of a third party to which the terminal belongs, where the identifier of the third party to which the terminal belongs means: when the third party deploys the terminal as a reader/writer for Internet of Things devices (for example, Passive IoT devices), the terminal has the identifier of the third party that deploys the terminal, and this third-party identifier indicates that the terminal is capable of supporting connection of Internet of Things devices of the third party, where the third party can be an entity that deploys, produces, or manages the terminal; and
(3) an identifier of the terminal, where for example, the identifier of the terminal can indicate that the terminal has an Internet of Things device access capability.

In a possible implementation of the embodiment of this application, the Internet of Things device group policy can further describe a method of grouping Internet of Things devices. In this possible implementation, the Internet of Things device group policy is further used to describe at least one of the following information:
(1) that the terminal establishes one session channel for all Internet of Things devices going to access the terminal, that is, all Internet of Things devices going to access the terminal belong to a same Internet of Things device group; and
(2) that the terminal establishes one session channel for Internet of Things devices of a same type going to access the terminal. That is, the Internet of Things devices going to access the terminal are grouped according to type, and devices of a same type belong to a same Internet of Things device group.

Optionally, the type (that is, the Internet of Things device type) may include at least one of the following: a type of Internet of Things service and a type of Internet of Things device. For example, the type of Internet of Things service may include at least one of the following: environmental measurement, tag tracking, and material management. The type of Internet of Things device includes at least one of the following: sensor and tag.

It should be noted that in the embodiment of this application, the Internet of Things device accessing the terminal can also be referred to as an Internet of Things device going to be connected to the terminal, an Internet of Things device scanned by the terminal, an Internet of Things device obtained by the terminal, an Internet of Things device accessing the communication network through the terminal, or an Internet of Things device that can be accessed to the communication network by the terminal, and the like, which is not limited in the embodiments of this application.

S212. The terminal establishes, according to the Internet of Things device group policy, a target session channel for a target Internet of Things device going to access the terminal.

In the embodiment of this application, optionally, before establishing a target session channel for the target Internet of Things device, the terminal can first determine whether a target session channel corresponding to a target Internet of Things device group to which the target device belongs has been established. If not, then the target session channel is established. Therefore, S212 may optionally further include: the terminal establishes, according to the Internet of Things device group policy, a target session channel for the target Internet of Things device going to access the terminal in a case that no target session channel corresponding to the target Internet of Things device group has been established, where the target Internet of Things device group is a group to which the target Internet of Things device belongs.

In a possible implementation of the embodiment of this application, the Internet of Things device group policy may further include an establishment parameter for the target session channel. When establishing the target session channel for the target Internet of Things device, the terminal can establish the corresponding target session channel according to the establishment parameter for the target session channel.

Optionally, the establishment parameter for the target session channel includes but is not limited to at least one of the following:
(1) first indication information, where the first indication information is used to indicate that the target session channel is of IP type;
(2) second indication information, where the second indication information is used to indicate that the target session channel is of Ethernet type;
(3) third indication information, where the third indication information is used to indicate a service continuity mode of the target session channel;
(4) fourth indication information, where the fourth indication information is used to indicate that the target session channel is a control plane channel;
(5) fifth indication information, where the fifth indication information is used to indicate that the target session channel is a user plane channel; and
(6) sixth indication information, where the sixth indication information is used to indicate that the target session channel is an optimized user plane channel. The optimized user plane channel may mean that the air interface acts as a user plane channel and that a control plane channel is used between the base station and the core network. For example, the following channel path is used: UE-RAN-AMF-SMF-NEF-server.

In an implementation, the establishment parameter for the target session channel may include one of the above (1) to (6) or may include multiple items from the above (1) to (6), for example, it may include the above (1) and (5), indicating that the target session channel is an IP type user plane channel. Alternatively, it may also include the above (3) and (5), indicating that the target session channel is a user plane channel and the service continuity mode is the mode indicated by the third indication information.

In a possible implementation, in a case that the Internet of Things device group policy describes that the terminal establishes a session channel for Internet of Things devices of a same type going to access the terminal, then the establishing a target session channel for a target Internet of Things device going to access the terminal in S212 may include the following steps.

Step 1. The terminal obtains a target type of the target Internet of Things device.

Step 2. The terminal establishes a target session channel for the target Internet of Things device according to the Internet of Things device group policy and the target type. Optionally, in step 2, in a case that no target session channel corresponding to the target type has been established, a target session channel is established for the target Internet of Things device.

In a manner for the terminal to obtain the target type of the target Internet of Things device, the terminal obtains an identifier of the target Internet of Things device, where the identifier indicates the target type of the target Internet of Things device. For example, the identifier of the target Internet of Things device includes field 1, which is used to indicate a type of Internet of Things service and/or a type of Internet of Things device of the target Internet of Things device. Alternatively, the identifier of the target Internet of Things device includes fields 2 and 3, which are used to indicate a type of Internet of Things service type and a type of Internet of Things device of the target Internet of Things device, respectively.

According to the above solution provided in the embodiments of this application, a terminal obtains an Internet of Things device group policy and establishes a session channel for an Internet of Things device going to access the terminal, according to the Internet of Things device group policy on a per Internet of Things device group basis. This can effectively utilize resources of the communication network, avoiding resource waste.

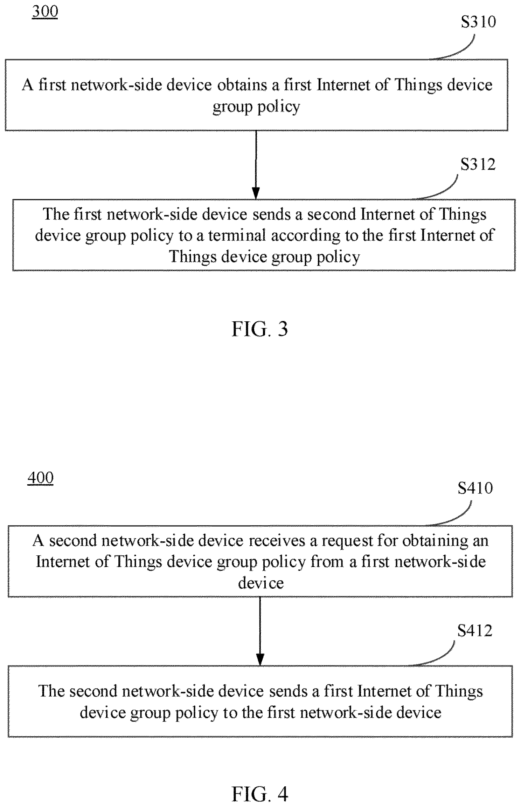

FIG. 3 is another schematic flowchart of a session establishment method for an Internet of Things device according to an embodiment of this application. The method 300 can be executed by a first network-side device. In other words, the method can be executed by software or hardware installed on the first network-side device. The first network-side device may be an AMF and/or SMF in a core network. As shown in FIG. 3, the method may include the following steps.

S310. The first network-side device obtains a first Internet of Things device group policy, where the first Internet of Things device group policy indicates that a session channel is established on a per Internet of Things device group basis.

In a possible implementation, the obtaining, by the first network-side device, the first Internet of Things device group policy may include: receiving, by the first network-side device, the first Internet of Things device group policy from a UDM and/or PCF.

In a possible implementation, before S310, the method further includes: obtaining, by the first network-side device, Internet of Things device access capability information of the terminal, where the Internet of Things device access capability information is used to indicate that the Internet of Things device can be accessed to the terminal. In this possible implementation, after obtaining the Internet of Things device access capability information of the terminal, the first network-side device knows that the terminal has the Internet of Things device access capability and obtains the first Internet of Things device group policy; or, after obtaining the Internet of Things device access capability information of the terminal, the first network-side device sends Internet of Things device access capability information to the UDM and/or PCF to obtain the first Internet of Things device group policy.

In a possible implementation, the first network-side device obtaining the Internet of Things device access capability information of the terminal may include: the first network-side device receiving a first message from the terminal, where the first message carries the Internet of Things device access capability information, and the first message includes one of the following: a registration message and a session establishment request message. In this possible implementation, the terminal can send the Internet of Things device access capability information in a registration message or a session establishment request message.

In the embodiments of this application, for details about the Internet of Things device access capability information and the acquisition of this Internet of Things device access capability information, reference may be made to related description in method 200, which is not repeated herein.

In a possible implementation, before the first network-side device receives the first Internet of Things device group policy from the UDM and/or PCF, the method may further include: the first network-side device sending the Internet of Things device access capability information to the UDM and/or PCF. After receiving the Internet of Things device access capability information, the UDM and/or PCF send the first Internet of Things device group policy to the first network-side device.

S312. The first network-side device sends a second Internet of Things device group policy to the terminal according to the first Internet of Things device group policy. The terminal has an Internet of Things device access capability, and the second Internet of Things device group policy indicates the terminal to establish a target session channel for the target Internet of Things device going to access the terminal on a per Internet of Things device group basis.

In the embodiments of this application, the second Internet of Things device group policy can be the same as or different from the first Internet of Things device group policy. For example, the second Internet of Things device group policy can be a subset of the first Internet of Things device group policy, where the first Internet of Things device group policy may include the establishment methods of session channels corresponding to various types of Internet of Things device groups in the communication network, while the second Internet of Things device group policy may only include the establishment methods of session channels corresponding to the types of Internet of Things device groups supported by the terminal. For example, the first network-side device can select the policy applicable to the terminal from the first Internet of Things device group policy received from the UDM and/or PCF as the second Internet of Things device group policy. For example, the first network-side device selects the policy applicable to the terminal based on the Internet of Things device access capability information of the terminal. For example, if the Internet of Things device access capability information of the terminal indicates that the terminal supports tag-type Internet of Things device connection, then the first network-side device sends the policy related to tag-type Internet of Things devices from the first Internet of Things device group policy to the terminal.

The second Internet of Things device group policy can be the Internet of Things device group policy obtained by the terminal in method 200.

In a possible implementation, the second Internet of Things device group policy is used to describe at least one of the following information:
(1) establishing one target session channel for all Internet of Things devices going to access the terminal; where in this case, all Internet of Things devices going to access the terminal belong to one Internet of Things device group; and
(2) establishing one target session channel for Internet of Things devices of a same type going to access the terminal, where in this case, Internet of Things devices going to access the terminal are grouped by type, and devices of a same type belong to one Internet of Things device group.

In a possible implementation, the Internet of Things device type includes at least one of the following: a type of Internet of Things service and a type of Internet of Things device. Optionally, the type of Internet of Things service includes but is not limited to at least one of the following: environmental measurement, tag tracking, and material management. The type of Internet of Things device includes but is not limited to at least one of the following: sensor and tag.

In a possible implementation, the second Internet of Things device group policy further includes an establishment parameter for the target session channel. Through the establishment parameter, the terminal is instructed to establish a target session channel corresponding to the parameter.

In a possible implementation, the establishment parameter for the target session channel includes but is not limited to at least one of the following:
(1) first indication information, where the first indication information is used to indicate that the target session channel is of IP type;
(2) second indication information, where the second indication information is used to indicate that the target session channel is of Ethernet type;
(3) third indication information, where the third indication information is used to indicate a service continuity mode of the target session channel;
(4) fourth indication information, where the fourth indication information is used to indicate that the target session channel is a control plane channel;
(5) fifth indication information, where the fifth indication information is used to indicate that the target session channel is a user plane channel; and
(6) sixth indication information, where the sixth indication information is used to indicate that the target session channel is an optimized user plane channel. The optimized user plane channel may mean that the air interface acts as a user plane channel and that a control plane channel is used between the base station and the core network. For example, the following channel path is used: UE-RAN-AMF-SMF-NEF-server.

According to the above solution provided in the embodiments of this application, a first network-side device sends a second Internet of Things device group policy to a terminal, instructing the terminal to establish, according to the Internet of Things device group policy on a per Internet of Things device group basis, a session channel for an Internet of Things device going to access the terminal. This can effectively utilize resources of the communication network, avoiding resource waste.

FIG. 4 is another schematic flowchart of a session establishment method for an Internet of Things device according to an embodiment of this application. The method 400 can be executed by a second network-side device. In other words, the method can be executed by software or hardware installed on the second network-side device, which may be a UDM and/or PCF in the core network. As shown in FIG. 4, the method may include the following steps.

S410. The second network-side device receives a request for obtaining an Internet of Things device group policy from a first network-side device.

In a possible implementation, the request for obtaining an Internet of Things device group policy includes Internet of Things device access capability information, which is used to indicate that the terminal is capable of accesing an Internet of Things device to a communication network. For example, the first network-side device may send the request for obtaining an Internet of Things device group policy to the second network-side device upon receiving a first message carrying the Internet of Things device access capability information.

In one or more possible implementations, the request for obtaining an Internet of Things device group policy can be a Nudm_UECM_Registration or Nudm_SDM_Get request, or it can be a request for establishing or modifying an acknowledged mode (Acknowledged Mode, AM) policy association (Policy Association).

S412. The second network-side device sends a first Internet of Things device group policy to the first network-side device. The first Internet of Things device group policy indicates that a session channel is established on a per Internet of Things device group basis.

The first Internet of Things device group policy can be the same as the first Internet of Things device group policy in method 300.

In a possible implementation, the first Internet of Things device group policy is used to describe at least one of the following information:
(1) establishing a session channel for all Internet of Things devices going to access the same terminal; that is, grouping the Internet of Things devices based on the terminal to which they are going to access, with devices going to access different terminals belonging to different Internet of Things device groups, and devices going to access a same terminal belonging to a same Internet of Things device group; and
(2) establishing a session channel for Internet of Things devices of a same type going to access a same terminal. That is, for a terminal, Internet of Things devices are grouped based on the types of Internet of Things devices going to access the terminal, with devices of a same type belonging to a same Internet of Things device group, and devices of different types belonging to different Internet of Things device groups.

In a possible implementation, the type (that is, the Internet of Things device type) includes at least one of the following: a type of Internet of Things service and a type of Internet of Things device. Optionally, the type of Internet of Things service includes at least one of the following: environmental measurement, tag tracking, and material management. The type of Internet of Things device includes at least one of the following: sensor and tag.

In a possible implementation, the first Internet of Things device group policy further includes an establishment parameter for a session channel. In practical applications, if the first Internet of Things device group policy is used to describe establishing a session channel for Internet of Things devices of a same type going to access a same terminal, then in the first Internet of Things device group policy, establishment parameters for session channels for different types of Internet of Things devices can be set separately.

In a possible implementation, the establishment parameter for a session channel includes at least one of the following:
(1) first indication information, where the first indication information is used to indicate that the session channel is of IP type;
(2) second indication information, where the second indication information is used to indicate that the session channel is of Ethernet type;
(3) third indication information, where the third indication information is used to indicate a service continuity mode of the session channel;
(4) fourth indication information, where the fourth indication information is used to indicate that the session channel is a control plane channel;
(5) fifth indication information, where the fifth indication information is used to indicate that the session channel is a user plane channel; and
(6) sixth indication information, where the sixth indication information is used to indicate that the target session channel is an optimized user plane channel. The optimized user plane channel may mean that the air interface acts as a user plane channel and that a control plane channel is used between the base station and the core network. For example, the following channel path is used: UE-RAN-AMF-SMF-NEF-server.

According to the above solution provided in the embodiments of this application, a second network-side device sends a first Internet of Things device group policy to a first network-side device, enabling the first network-side device to indicate the terminal to establish a session channel for an Internet of Things devices going to access the terminal on a per Internet of Things device group basis. This can effectively utilize resources of the communication network, avoiding resource waste.

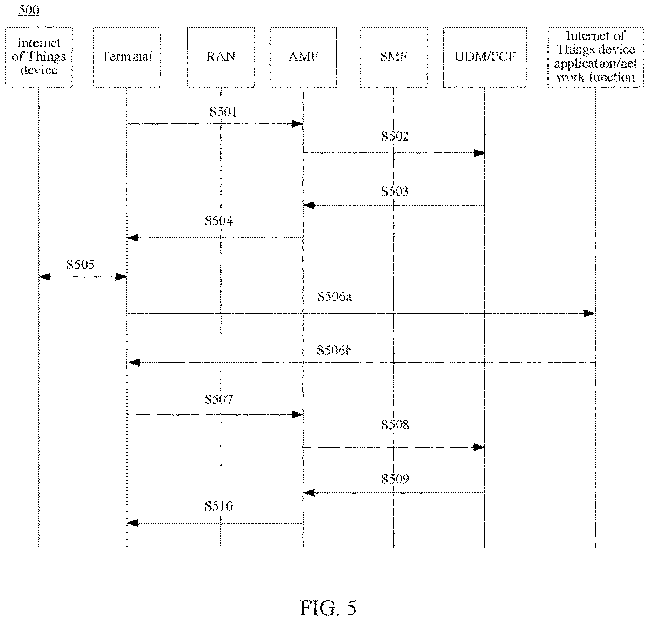

FIG. 5 is another schematic flowchart of a session establishment method for an Internet of Things device according to an embodiment of this application. As shown in FIG. 5, the method mainly includes the following steps.

S501. UE sends Passive IoT device (Passive IoT) access capability information to an AMF, where the Passive IoT device access capability information of the UE indicates that Passive IoT devices can access a 5G network through the UE. Passive IoT devices refer to IoT devices that do not have their own power source or battery and need to obtain energy from other devices or the environment to transmit signals. For example, the UE can act as a reader to scan Passive IoT devices; or the UE can establish a PDU session for Passive IoT devices to transmit data of the Passive IoT devices.

The Passive IoT device access capability information of the UE may include at least one of the following: a Passive IoT type supported by the UE, an identifier of a third party to which the UE belongs, an identifier of the UE, and a Passive IoT device data transmission mode supported by the UE. The Passive IoT type may include Passive IoT service types (such as environmental monitoring, tag tracking, and material management.) and/or Passive IoT device types (such as sensors and tags.). The identifier of the third party to which the UE belongs means that in a case that a third party deploys the UE as a reader for Passive IoT devices, the UE has the identifier of the third party that deploys the UE. In this case, the UE can support connection of Passive IoT devices of the third party.

The supported Passive IoT device data transmission mode includes at least one of the following: uplink data transmission of a Passive IoT device, downlink data transmission of a Passive IoT device, data transmission of a Passive IoT device, the UE acting as a relay for uplink data of a Passive IoT device, the UE acting as a relay for downlink data of a Passive IoT device, the UE acting as a relay for data transmission of a Passive IoT device, transmitting Passive IoT device data in a group manner, and the UE acting as a relay for transmitting Passive IoT device data in a group manner.

Optionally, the identifier of the UE can indicate that the terminal has the Internet of Things device access capability. Optionally, the identifier of the UE can also indicate a Passive IoT type supported by the UE and/or an identifier of a third party to which the UE belongs.

In a possible implementation, the UE sends the Passive IoT device access capability information to the AMF via a non-access stratum (Non-Access Stratum, NAS) message. For example, the UE can send the Passive IoT device access capability information of the UE through a registration message. Optionally, the UE can also send the Passive IoT device access capability information to the RAN via a radio resource control (Radio Resource Control, RRC) message.

In another possible implementation, the UE can send the Passive IoT device access capability information of the UE to the AMF via the RAN. For example, the UE sends the Passive IoT device access capability information of the UE to the RAN via an RRC message; the RAN sends the Passive IoT device access capability information of the UE to the AMF via an NG application protocol (Application Protocol, NGAP) message.

In the two possible implementations mentioned above, optionally, the RAN can also send Passive IoT device access capability information of the RAN to the AMF. The Passive IoT device access capability information of the RAN can include at least one of the following: a Passive IoT type supported by the RAN, an identifier of a third party associated with the RAN, and Passive IoT device data transmission mode supported by the RAN.

The third party associated with the RAN may be understood as that the RAN is capable of supporting connection of a Passive IoT device of the third party.

S502. The AMF sends the Passive IoT device access capability information of the UE to a UDM/PCF.

For example, the AMF can send a Nudm_UECM_Registration or Nudm_SDM_Get request to the UDM, where the request carries the Passive IoT device access capability information of the UE.

For example, the AMF can have the Passive IoT device access capability information of the UE carried in a request for establishing or modifying an AM policy association (Policy Association). For example, the AMF sends a Npcf_AMPolicyControl_Create or Npcf_AMPolicyControl_Update request to a PCF, where the request carries the Passive IoT device access capability information of the UE.

Optionally, the AMF also sends the Passive IoT device access capability of the RAN information to the UDM/PCF.

S503. The UDM/PCF sends a Passive IoT device group policy to the AMF.

The Passive IoT device group policy can be used to describe how the UE establishes a PDU session for a Passive IoT device. The Passive IoT device group policy can describe at least one of the following information: all passive IoT devices scanned by the UE sharing one PDU session, the UE establishing a session channel according to the passive IoT type, and Passive IoT device data transmission mode.

The Passive IoT device data transmission mode can include at least one of the following: the UE transmits uplink data of Passive IoT devices, the UE receives downlink data of Passive IoT devices, Passive IoT device data is transmitted via the UE, the RAN receives uplink data of Passive IoT devices, the RAN transmits downlink data of Passive IoT devices, and Passive IoT device data is transmitted via the RAN.

For example, devices can be grouped according to the Passive IoT service type, with different groups using different session channels.

Optionally, the Passive IoT device group policy can also include a session channel establishment parameter corresponding to the Passive IoT type. For example, different groups can use session channels established with different parameters.

The session channel establishment parameter can include at least one of the following: IP type indication information, ethernet type indication information, service continuity mode indication information, control plane channel indication information, user plane channel indication information, and optimized user plane channel indication information. The session channel establishment parameter can be used to indicate the establishment of different types of session channels, such as indicating the establishment of a user plane channel PDU session (that is, using the user plane to transmit data), a control plane channel PDU session (that is, using control plane signaling to transmit data), an optimized user plane PDU session (that is, using both control and user planes to transmit data, such as using the user plane over the air interface, and using the control plane between the RAN and the core network), an IP type PDU session (or ethernet type PDU session), a PDU session with a service continuity mode as SSC mode 1 or 2 or 3, and the like.

Optionally, the UDM/PCF can determine, based on subscription data and/or operator configuration information of the UE, whether the UE allows connection of Passive IoT devices.

For example, the UDM can send a Nudm_UECM_Registration or Nudm_SDM_Get response to the AMF, where the response carries the Passive IoT device group policy.

For example, the PCF can send the Passive IoT device group policy to the AMF during the establishment or modification of the AM Policy Association. For example, the PCF sends a Npcf_AMPolicyControl_Create or Npcf_AMPolicyControl_Update response to the AMF, where the response carries the Passive IoT device group policy.

S504. The AMF sends the Passive IoT device group policy to the UE.

In a possible implementation, the AMF sends the Passive IoT device group policy to the UE via a NAS message. For example, the AMF can send the Passive IoT device group policy to the UE via a registration response message. Optionally, the AMF can also send the Passive IoT device group policy to the RAN. Optionally, the AMF can also send the Passive IoT device access capability information of the UE to the RAN, indicating that the UE has the Passive IoT device access capability.

In another possible implementation, the AMF can send the Passive IoT device group policy to the UE via the RAN. For example, the AMF sends the Passive IoT device group policy to the RAN via an NGAP message; and the RAN sends the Passive IoT device group policy to the UE via an RRC message. Optionally, the AMF can also send the Passive IoT device access capability information to the RAN via an NGAP message, indicating that the UE has the Passive IoT device access capability. It is worth noting that the Passive IoT device group policy itself can also serve as information indicating that the UE has the Passive IoT device access capability.

It should be noted that steps S501 to S504 are optional. For example, the UE and/or RAN can also obtain the Passive IoT device group policy through configuration.

S505. The UE obtains an identifier of a Passive IoT device.

For example, the UE can act as a reader to obtain the identifier or signal sent by the Passive IoT device. The UE can alternatively not act as a reader but obtain the Passive IoT device identifier or signal sent by other devices (for example, the RAN acting as a reader to read the identifier or signal sent by the Passive IoT device).

The Passive IoT device identifier can be an electronic product code (Electronic Product Code, EPC), a MAC address, or other information that can be used to identify the Passive IoT device.

S506. The UE obtains a type of the Passive IoT device.

In a possible implementation, the UE can obtain the Passive Internet of Things device type from the Passive IoT application (App)/network function (NF), and S506 may include S506a and 506b as shown in FIG. 5.

For example, the UE sends the identifier of the Passive IoT device to the Passive IoT App/NF. The UE receives the type of the Passive IoT device sent by the Passive IoT App/NF.

Specifically, the UE can communicate with the Passive IoT App/NF through its own control plane or user plane session channel (such as a PDU session). For communication through a PDU session, the UE needs to establish the PDU session first. The UE can establish the PDU session based on configuration or by receiving a PDU session establishment parameter (such as DNN and/or S-NSSAI) from the network-side device. For example, the UE can receive a UE route selection policy (UE Route Selection Policy, URSP) during a registration process, which includes a parameter for establishing the PDU session.

In another possible implementation, the UE can obtain the type of the Passive IoT device through configuration information.

In yet another possible implementation, the UE can obtain the type of the Passive IoT device from the identifier information of the Passive IoT device. For example, the identifier information of the Passive IoT device includes a type field, which indicates the type information of the Passive IoT device.

Certainly, the UE can also support only one type of Passive IoT device. In this case, the UE can default to assuming that all Passive IoT devices going to access the UE belong to that type, and S506 is not required, making S506 an optional step.

S507. The UE sends a PDU session establishment request to the AMF according to the Passive IoT device group policy obtained in step S504, requesting to establish a PDU session for the Passive IoT device.

Optionally, before S507, the UE determines whether a PDU session corresponding to the Passive IoT device type already exists. If it already exists, no new session is established. If it does not exist, the PDU session establishment request is sent.

The UE can send the PDU session establishment request to the AMF via the RAN, that is, the UE sends the PDU session establishment request to the RAN, and the RAN forwards the PDU session establishment request to the AMF. Optionally, the UE can also send indication information of the Passive IoT device data transmission mode to the RAN. For example, the indication information of the Passive IoT device data transmission mode indicates "uplink" and/or "downlink", meaning that the PDU session is used for transmitting uplink and/or downlink data of the PIoT device. The UE can send the indication information of the Passive IoT device data transmission mode to the RAN based on the Passive IoT device data transmission mode in the Passive IoT device group policy.

For example, the UE sends an RRC message to the RAN, which includes a PDU session establishment request.

S508. The AMF sends a PDU session establishment request to the SMF, requesting to establish a PDU session for the Passive IoT device.

S509. The SMF establishes a PDU session based on the PDU session establishment request and sends a PDU session establishment response to the AMF.

S510. The AMF returns a PDU session establishment response to the UE, establishing a PDU session for the Passive IoT device.

After the PDU session is established, the RAN can route the uplink and/or downlink data of the Passive IoT device based on the data transmission mode obtained in the previous steps.

For example, if the Passive IoT device data transmission mode indicates that the UE transmits uplink data of the Passive IoT device, or the RAN transmits downlink data of the Passive IoT device, then when the RAN receives downlink data of the Passive IoT device, the RAN sends the downlink data to the Passive IoT device; when the RAN receives uplink data of the Passive IoT device from the UE, the RAN sends the uplink data to a UPF of the PDU session.

The steps S501 to S504 can occur during the registration process of the UE, for example, in step S501, the UE sends a registration request message to the AMF, which includes Passive IoT device access capability information; in step S504, the AMF sends a registration acceptance message to the UE, which includes the Passive IoT device group policy.

Certainly, this is not limited to the above, the steps S501 to S504 can also occur at any time after the UE registration. Accordingly, messages in steps S501 and S504 can be replaced with other non-access stratum (Non-Access-Stratum, NAS) messages.

The execution order of S506 and steps S507 to S510 is not limited. For example, in step S505, if Passive IoT device is a first Passive IoT device identifier obtained by the UE, the UE can also first execute steps 507 to S510, and then execute step 506.

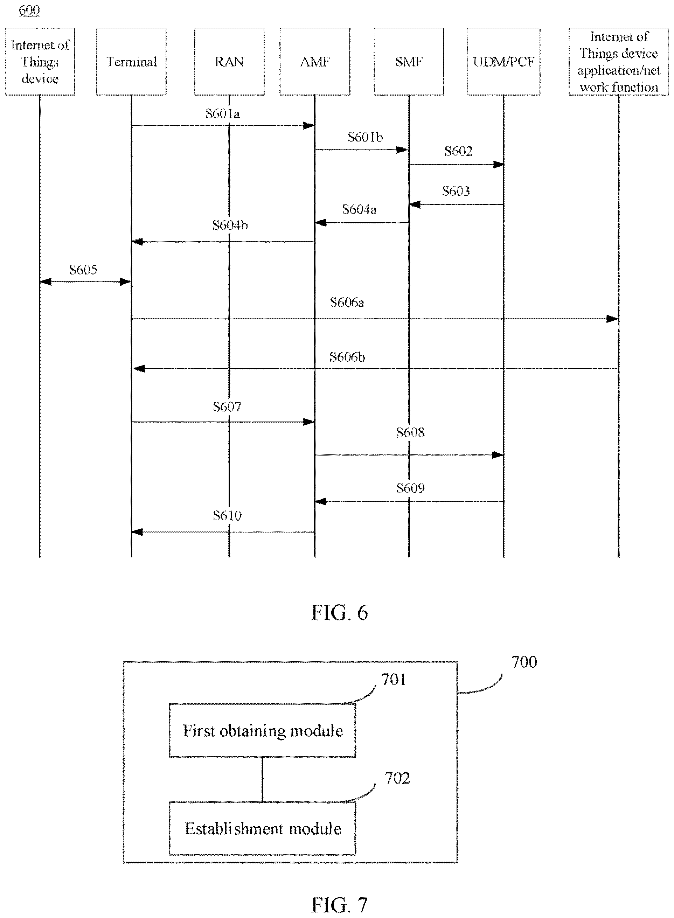

FIG. 6 is another schematic flowchart of a session establishment method for an Internet of Things device according to an embodiment of this application. As shown in FIG. 6, the method mainly includes the following steps.

S601. UE sends Passive IoT device access capability information of the UE to an SMF, where the Passive IoT device access capability information of the UE indicates that a Passive IoT device can access the 5G network via the UE. For example, the UE can act as a reader to scan the Passive IoT device; or the UE can establish a PDU session for Passive IoT devices to transmit Passive IoT device data.

For details about the Passive IoT device access capability information of the UE, reference may be made to the description in step S501 of the method 500.

For example, the UE can send a PDU session establishment request message to the SMF, which includes the Passive IoT device access capability information of the UE.

For another example, the UE can also send the Passive IoT device access capability information of the UE to the SMF in other processes, such as a PDU session modification request message. This is not limited in the embodiment of this application.

The UE can send the Passive IoT device access capability information of the UE to the SMF via the AMF. As shown in FIG. 6, S601 may include steps S601a and S601b.

In a possible implementation, the UE sends the Passive IoT device access capability information of the UE to the AMF via a NAS message. Optionally, the UE can also send the Passive IoT device access capability information of the UE to a RAN via an RRC message.

In another possible implementation, the UE can send the Passive IoT device access capability information of the UE to the AMF via the RAN. For example, the UE sends the Passive IoT device access capability information of the UE to the RAN via an RRC message; and the RAN sends the Passive IoT device access capability information of the UE to the AMF via an NGAP message.

In the two possible implementations mentioned above, the AMF forwards the Passive IoT device access capability information of the UE to the SMF. Optionally, the RAN can also send Passive IoT device access capability information of the RAN to the AMF. For details about the Passive IoT device access capability information of the RAN, reference may be made to the description in S501 of method 500. In this case, the AMF can forward the Passive IoT device access capability information of the RAN to the SMF.

S602. The SMF sends the Passive IoT device access capability information of the UE to a UDM/PCF.

For example, the SMF sends a Nudm_SDM_Get or Nudm_SDM_Subscribe or Nudm_SDM_Get request to the UDM, where the request carries the Passive IoT device access capability information of the UE.

For example, the SMF can also have the Passive IoT device access capability information of the UE carried in a request for establishing or modifying an SM Policy Association. For example, the SMF can send a Npcf_SMPolicyControl_Create or Npcf_SMPolicyControl_Update request to the PCF, where the request carries the Passive IoT device access capability information of the UE.

Optionally, the AMF also sends the Passive IoT device access capability information of the RAN to the UDM/PCF.

S603. The UDM/PCF sends a Passive IoT device group policy to the SMF.

For details about S603, reference may be made to the description about S503 in method 500.

For example, the UDM sends a Nudm_SDM_Get or Nudm_SDM_Subscribe response to the SMF, where the response carries the Passive IoT device group policy.

For example, the PCF sends the Passive IoT device group policy to the SMF during the establishment or modification of the SM Policy Association. For example, the PCF sends a Npcf_SMPolicyControl_Create or Npcf_SMPolicyControl_Update response to the SMF, where the response carries the Passive IoT device group policy.

S604. The SMF sends the Passive IoT device group policy to the UE.

For example, the SMF can send a PDU session establishment response message to the SMF, where the response message includes the Passive IoT device group policy.

For another example, the SMF can also send the Passive IoT device group policy to the UE during other processes, such as a PDU session modification response message. This is not limited in this application.

Optionally, the SMF may send the Passive IoT device group policy to the UE via the AMF. As shown in FIG. 6, S604 may include steps S604a and S604b. The SMF sends the Passive IoT device group policy to the AMF, and the AMF sends the Passive IoT device group policy to the UE. For details about this implementation, reference may be made to the description in S504.

Optionally, the SMF sends the Passive IoT device access capability information of the UE to the RAN, indicating that the UE has a Passive IoT device access capability.

Optionally, the SMF sends the Passive IoT device group policy to the RAN.

For example, the SMF may send the Passive IoT device access capability information of the UE and/or the Passive IoT device group policy to the RAN via an N2 session management parameter.

It is worth noting that the UE and/or RAN can also obtain the Passive IoT device group policy through configuration.

For details about S605 to S610, reference may be made to the description of S505 to S510 in method 500.

According to the technical solution provided according to the embodiments of this application, a communication system establishes a session for an Internet of Things device based on a group to which the Internet of Things device belongs and group policy information, effectively utilizing network resources.

The session establishment method for an Internet of Things device according to the embodiments of this application can be executed by a session establishment apparatus for an Internet of Things device. In the embodiments of this application, the session establishment apparatus for an Internet of Things device executing the session establishment method for an Internet of Things device is used as an example to illustrate the session establishment apparatus for an Internet of Things device provided in the embodiments of this application.

In the embodiments of this application, "Passive IoT" is sometimes abbreviated as PIOT; "identifier" is sometimes referred to as ID; and "device" is sometimes referred to as equipment.

FIG. 7 is a schematic structural diagram of a session establishment apparatus for an Internet of Things device according to an embodiment of this application. The apparatus can be applied to a terminal. As shown in FIG. 7, the apparatus 700 mainly includes: a first obtaining module 701 configured to obtain an Internet of Things device group policy, where the loT device group policy indicates the terminal to establish a session channel on a per Internet of Things device group basis; and an establishment module 702 configured to establish, according to the Internet of Things device group policy, a target session channel for a target IoT device going to access the terminal.

In a possible implementation, the Internet of Things device group policy is used to describe at least one of the following information:
establishing a session channel for all Internet of Things devices going to access the terminal; and
establishing a session channel for Internet of Things devices of a same type going to access the terminal.

In a possible implementation, the establishment module 702 establishes, according to the Internet of Things device group policy, a target session channel for a target Internet of Things device going to access the terminal, including:
obtaining a target type of the target Internet of Things device; and
establishing a target session channel for the target Internet of Things device according to the Internet of Things device group policy.

In a possible implementation, the establishment module 702 establishes a target session channel corresponding to the target type for the target IoT device based on the IoT device group policy, including:
establishing a target session channel for the target Internet of Things device in a case that no target session channel corresponding to the target type has been established.

In a possible implementation, the type includes at least one of the following: a type of Internet of Things service and a type of Internet of Things device.

In a possible implementation, the type of Internet of Things service includes at least one of the following: environmental measurement, tag tracking, and material management.

In a possible implementation, the type of Internet of Things device includes at least one of the following: sensor and tag.

In a possible implementation, the IoT device group policy further includes an establishment parameter for the target session channel.

In a possible implementation, the establishment parameter for the target session channel includes at least one of the following:
first indication information, where the first indication information is used to indicate that the target session channel is of IP type;
second indication information, where the second indication information is used to indicate that the target session channel is of Ethernet type;
third indication information, where the third indication information is used to indicate a service continuity mode of the target session channel;
fourth indication information, where the fourth indication information is used to indicate that the target session channel is a control plane channel; and
fifth indication information, where the fifth indication information is used to indicate that the target session channel is a user plane channel.

In a possible implementation, the first obtaining module 701 obtains the Internet of Things device group policy, including:
obtaining the Internet of Things device group policy from a network-side device.

In a possible implementation, the apparatus further includes: a first sending module configured to send Internet of Things device access capability information to a network-side device, where the Internet of Things device access capability information is used to indicate that the terminal is capable of accesing an Internet of Things device to a communication network.

In a possible implementation, the first sending module is further configured to send the Internet of Things device access capability information to a network-side device, where the Internet of Things device access capability information is used to indicate that the terminal is capable of accesing an Internet of Things device to a communication network.

In a possible implementation, the Internet of Things device access capability information includes at least one of the following:
a type of Internet of Things device supported by the terminal;
an identifier of a third party to which the terminal belongs;
an identifier of the terminal; and
an Internet of Things device data transmission mode supported by the terminal.

Optionally, the Internet of Things device data transmission mode includes at least one of the following:
uplink data transmission of the Internet of Things device;
downlink data transmission of the Internet of Things device;
data transmission of the Internet of Things device;
the terminal acting as a relay for uplink data of the Internet of Things device;
the terminal acting as a relay for downlink data of the Internet of Things device;
the terminal acting as a relay for data transmission of the Internet of Things device;
transmitting Internet of Things device data in a per group manner; and
the terminal acting as a relay for transmitting the Internet of Things device data in a per group manner.

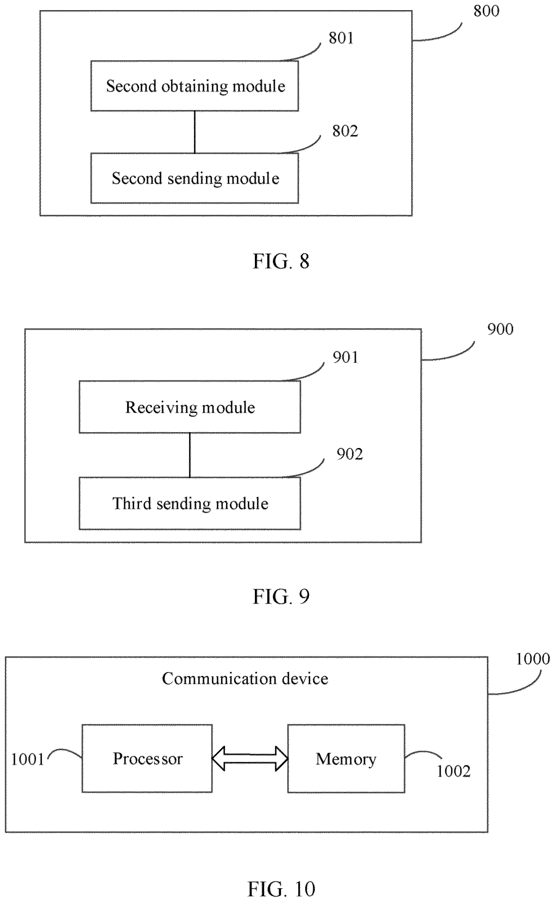

FIG. 8 is another schematic structural diagram of a session establishment apparatus for an Internet of Things device according to an embodiment of this application. The apparatus can be applied to a first network-side device. As shown in FIG. 8, the apparatus 800 mainly includes: a second obtaining module 801 configured to obtain a first Internet of Things device group policy, where the first Internet of Things device group policy indicates that a session channel is established on a per Internet of Things device group basis; and a second sending module 802 configured to send a second Internet of Things device group policy to a terminal according to the first Internet of Things device group policy, where the terminal has an Internet of Things device access capability, and the second Internet of Things device group policy indicates the terminal to establish a target session channel for a target Internet of Things device going to access the terminal, on a per Internet of Things device group basis.

In a possible implementation, the second obtaining module 801 is further configured to obtain the Internet of Things device access capability information of the terminal, where the Internet of Things device access capability information is used to indicate that Internet of Things devices can be accessed to the terminal.

In a possible implementation, the second Internet of Things device group policy is used to describe at least one of the following information:
establishing one target session channel for all Internet of Things devices going to access the terminal; and
establishingone target session channel for Internet of Things devices of a same type going to access the terminal.

In a possible implementation, the type includes at least one of the following: a type of Internet of Things service and a type of Internet of Things device.

In a possible implementation, the type of Internet of Things service includes at least one of the following: environmental measurement, tag tracking, and material management.

In a possible implementation, the type of Internet of Things device includes at least one of the following: sensor and tag.

In a possible implementation, the second Internet of Things device group policy further includes an establishment parameter for the target session channel.

In a possible implementation, the establishment parameter for the target session channel includes at least one of the following:
first indication information, where the first indication information is used to indicate that the target session channel is of IP type;
second indication information, where the second indication information is used to indicate that the target session channel is of Ethernet type;
third indication information, where the third indication information is used to indicate a service continuity mode of the target session channel;
fourth indication information, where the fourth indication information is used to indicate that the target session channel is a control plane channel; and
fifth indication information, where the fifth indication information is used to indicate that the target session channel is a user plane channel.

In a possible implementation, the second obtaining module 801 obtains the Internet of Things device access capability information of the terminal, including:
receiving a first message from the terminal, where the first message carries the Internet of Things device access capability information, and the first message includes one of the following: a registration message and a session establishment request message.

In a possible implementation, the second obtaining module 801 obtains a first Internet of Things device group policy, including:
receiving the first Internet of Things device group policy from a unified data management UDM or policy control function PCF entity.

FIG. 9 is a schematic structural diagram of a session establishment apparatus for an Internet of Things device according to an embodiment of this application. The apparatus can be applied to a second network-side device. As shown in FIG. 9, the apparatus 900 mainly includes: a receiving module 901 configured to receive a request for obtaining an Internet of Things device group policy from a first network-side device; and a third sending module 902 configured to send a first Internet of Things device group policy to the first network-side device, where the first Internet of Things device group policy indicates that a session channel is established on a per Internet of Things device group basis.

In a possible implementation, the first Internet of Things device group policy is used to describe at least one of the following information:
establishing a session channel for all Internet of Things devices going to access a same terminal; and
establishing a session channel for Internet of Things devices of a same type going to access a same terminal.

In a possible implementation, the type includes at least one of the following: a type of Internet of Things service and a type of Internet of Things device.

In a possible implementation, the type of Internet of Things service includes at least one of the following: environmental measurement, tag tracking, and material management.

In a possible implementation, the type of Internet of Things device includes at least one of the following: sensor and tag.

In a possible implementation, the Internet of Things device group policy further includes an establishment parameter for a session channel.

In a possible implementation, the establishment parameter for a session channel includes at least one of the following:
first indication information, where the first indication information is used to indicate that the session channel is of IP type;
second indication information, where the second indication information is used to indicate that the session channel is of Ethernet type;
third indication information, where the third indication information is used to indicate a service continuity mode of the session channel;
fourth indication information, where the fourth indication information is used to indicate that the session channel is a control plane channel; and
fifth indication information, where the fifth indication information is used to indicate that the session channel is a user plane channel.

In a possible implementation, the request for obtaining an Internet of Things device group policy includes Internet of Things device access capability information, where the Internet of Things device access capability information is used to indicate that the terminal is capable of accesing an Internet of Things device to a communication network.

The session establishment apparatus for an Internet of Things device in the embodiments of this application may be an electronic device, for example an electronic device having an operating system, or may be a component of an electronic device, for example, an integrated circuit or a chip. The electronic device may be a terminal or a device other than terminals. For example, the mobile terminal may include but is not limited to the types of the terminal 11 listed above, and the other devices may be servers, network attached storage (Network Attached Storage, NAS), or the like, which are not specifically limited in the embodiments of this application.

The session establishment apparatus for an Internet of Things device provided in this embodiment of this application can implement the processes implemented by the method embodiments in FIG. 2 to FIG. 6, with the same technical effects achieved. To avoid repetition, details are not described herein again.

Optionally, as shown in FIG. 10, an embodiment of this application further provides a communication device 1000 including a processor 1001 and a memory 1002, where the memory 1002 stores a program or instructions executable on the processor 1001. For example, in a case that the communication device 1000 is a terminal, and when the program or instructions are executed by the processor 1001, the processes of the foregoing embodiment of the session establishment method 200 for an Internet of Things device are implemented, with the same technical effects achieved. In a case that the communication device 1000 is a network-side device, when the program or instructions are executed by the processor 1001, the processes of the foregoing embodiment of the session establishment methods 300 and 400 for an Internet of Things device are implemented, with the same technical effects achieved. To avoid repetition, details are not described herein again.

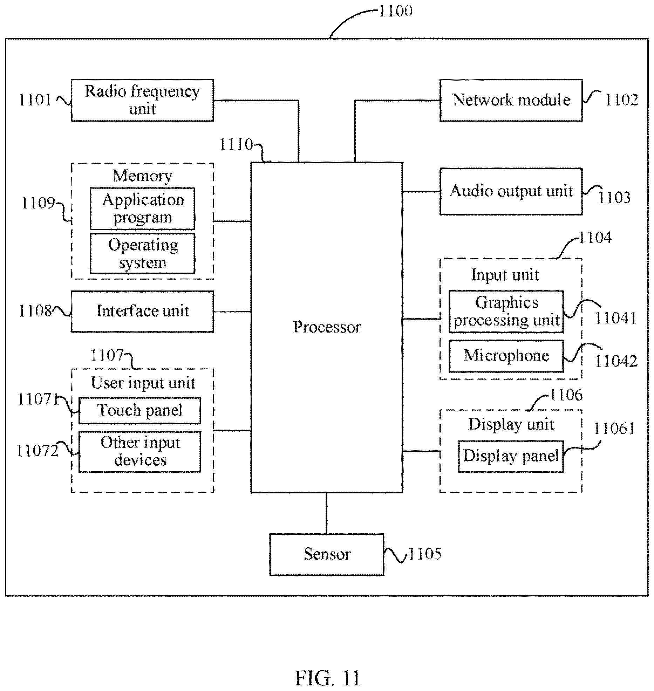

An embodiment of this application further provides a terminal, including a processor and a communication interface, where the processor is configured to implement the steps of the session establishment method 200 embodiments for an Internet of Things device, or the steps executed by the UE in the method 500 or 600 embodiment, and the communication interface is configured for communication with an external device. This terminal embodiment corresponds to the foregoing method embodiment on the terminal side. All processes and implementations in the foregoing method embodiment can be applicable to this terminal embodiment, with the same technical effects achieved. Specifically, FIG. 11 is a schematic diagram of a hardware structure of a terminal implementing the embodiments of this application.

The terminal 1100 includes but is not limited to at least part of these components: a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

It can be understood by those skilled in the art that the terminal 1100 may further include a power supply (for example, battery) supplying power to the components. The power supply may be logically connected to the processor 1110 via a power management system, so that functions such as charge management, discharge management, and power consumption management are implemented via the power management system. The structure of the terminal shown in FIG. 11 does not constitute a limitation on the terminal. The terminal may include more or fewer components than illustrated in the figure, or combine some components, or have a different component arrangement. Details are not described herein.

It should be understood that the input unit 1104 may include a graphics processing unit (Graphics Processing Unit, GPU) 11041 and a microphone 11042. The graphics processing unit 11041 processes image data of still pictures or videos that are obtained by an image capture apparatus (for example, camera) in an image or video capture mode. The display unit 1106 may include a display panel 11061. The display panel 11061 may be configured in a form of a liquid crystal display, an organic light-emitting diode display, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function button (for example, volume control button or on/off button), a trackball, a mouse, and a joystick. Details are not described herein.

In an embodiment of this application, the radio frequency unit 1101 receives downlink data from a network-side device and transfers the data to the processor 1110 for processing; and the radio frequency unit 1101 can additionally send uplink data to the network-side device. Generally, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may include a first storage are for storing programs or instructions and a second storage area for storing data. The first storage area may store an operating system, an application program or instructions required by at least one function (for example, a sound playback function or an image playback function), and the like. In addition, the memory 1109 may include a volatile memory or a non-volatile memory, or the memory 1109 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, SRAM), a static RAM (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 described in the embodiments of this application is intended to include but is not limited to these and any other suitable types of memories.

The processor 1110 may include one or more processing units. Optionally, the processor 1110 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 1110.

The processor 1110 is configured to:
obtain an Internet of Things device group policy, where the Internet of Things device group policy indicates the terminal to establish a session channel on a per Internet of Things device group basis; and
establish, according to the Internet of Things device group policy, a target session channel for a target Internet of Things device going to access the terminal.

A terminal provided in the embodiments of this application can obtain an Internet of Things device group policy and establish a session channel for an Internet of Things device going to access the terminal, according to the Internet of Things device group policy on a per Internet of Things device group basis. This can effectively utilize resources of the communication network, avoiding resource waste.

An embodiment of this application further provides a network-side device, including a processor and a communication interface, where the processor is configured to implement the steps of the session establishment method 300 or 400 embodiment for an Internet of Things device, or the steps executed by the AMF, SMF, and UDM/PCF in the method 500 or 600 embodiment, and the communication interface is configured for communication with an external device. This network-side device embodiment corresponds to the foregoing network-side device method embodiment. All processes and implementations in the foregoing method embodiment can be applicable to this network-side device embodiment, with the same technical effects achieved.

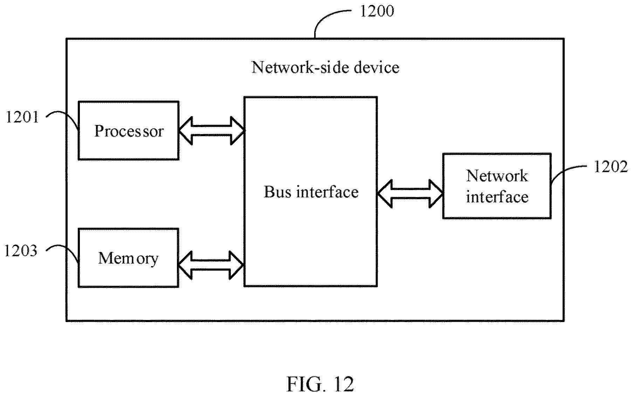

Specifically, an embodiment of this application further provides a network-side device. As shown in FIG. 12, the network-side device 1200 includes a processor 1201, a network interface 1202, and memory 1203. The network interface 1202 is, for example, a common public radio interface (Common Public Radio Interface, CPRI).

Specifically, the network-side device 1200 in this embodiment of this application further includes instructions or a program stored in the memory 1203 and executable on the processor 1201. The processor 1201 invokes the instructions or program in the memory 1203 to execute the method executed by the modules shown in FIG. 8 or 9, with the same technical effects achieved. To avoid repetition, details are not described herein again.

An embodiment of this application further provides a readable storage medium, where the readable storage medium stores a program or instructions, and when the program or instructions are executed by a processor, the processes of the embodiments of the foregoing session establishment methods 200 to 400 for an Internet of Things device are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

Another embodiment of this application provides a chip, where the chip includes a processor and a communication interface, the communication interface is coupled to the processor, and the processor is configured to run a program or instructions to implement the processes of the embodiments of the foregoing session establishment methods 200 to 400 for an Internet of Things device, with the same technical effects achieved. To avoid repetition, details are not described herein again.

It should be understood that the chip mentioned in an embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the embodiments of the foregoing session establishment methods 200 to 400 for an Internet of Things device, with the same technical effects achieved. To avoid repetition, details are not described herein again.

An embodiment of this application further provides a session establishment system for an Internet of Things device, including a terminal and a network-side device. The terminal is configured to execute the steps of the session establishment method 200 for an Internet of Things device, and the network-side device is configured to execute the steps of the session establishment method 300 or 400 for an Internet of Things device.

It should be noted that in this specification, the terms "comprise" and "include", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A session establishment method for an Internet of Things device, comprising:
obtaining, by a terminal, an Internet of Things device group policy, wherein the Internet of Things device group policy indicates the terminal to establish a session channel on a per Internet of Things device group basis; and
establishing, by the terminal according to the Internet of Things device group policy, a target session channel for a target Internet of Things device going to access the terminal.

2. The method according to claim 1, wherein the Internet of Things device group policy is used to describe at least one of the following information:
that the terminal establishes one session channel for all Internet of Things devices going to access the terminal; and
that the terminal establishes one session channel for Internet of Things devices of a same type going to access the terminal.

3. The method according to claim 2, wherein the establishing, by the terminal according to the Internet of Things device group policy, a target session channel for a target Internet of Things device going to access the terminal comprises:
obtaining, by the terminal, a target type of the target Internet of Things device; and
establishing a target session channel for the target Internet of Things device according to the Internet of Things device group policy.

4. The method according to claim 3, wherein the establishing, according to the Internet of Things device group policy, a target session channel corresponding to the target type for the target Internet of Things device comprises:
establishing a target session channel for the target Internet of Things device in a case that no target session channel corresponding to the target type has been established.

5. The method according to claim 2, wherein the type comprises at least one of the following: a type of Internet of Things service and a type of Internet of Things device.

6. The method according to claim 5, wherein the type of the Internet of Things service comprises at least one of the following: environmental measurement, tag tracking, and material management.

7. The method according to claim 5, wherein the type of the Internet of Things device comprises at least one of the following: sensor and tag.

8. The method according to claim 1, wherein the Internet of Things device group policy further comprises an establishment parameter for the target session channel.

9. The method according to claim 8, wherein the establishment parameter for the target session channel comprises at least one of the following:
first indication information, wherein the first indication information is used to indicate that the target session channel is of IP type;
second indication information, wherein the second indication information is used to indicate that the target session channel is of Ethernet type;
third indication information, wherein the third indication information is used to indicate a service continuity mode of the target session channel;
fourth indication information, wherein the fourth indication information is used to indicate that the target session channel is a control plane channel; and
fifth indication information, wherein the fifth indication information is used to indicate that the target session channel is a user plane channel.

10. The method according to any one of claims 1 to 9, wherein the obtaining, by a terminal, an Internet of Things device group policy comprises:
obtaining, by the terminal, the Internet of Things device group policy from a network-side device.

11. The method according to claim 10, wherein before the obtaining, by the terminal, the Internet of Things device group policy from a network-side device, the method further comprises:
sending, by the terminal, Internet of Things device access capability information to the network-side device, wherein the Internet of Things device access capability information is used to indicate that the terminal is capable of accessing an Internet of Things device to a communication network.

12. The method according to claim 11, wherein the Internet of Things device access capability information comprises at least one of the following:
a type of Internet of Things device supported by the terminal;
an identifier of a third party to which the terminal belongs;
an identifier of the terminal; and
an Internet of Things device data transmission mode supported by the terminal.

13. The method according to claim 12, wherein the Internet of Things device data transmission mode comprises at least one of the following:
uplink data transmission of the Internet of Things device;
downlink data transmission of the Internet of Things device;
data transmission of the Internet of Things device;
the terminal acting as a relay for uplink data of the Internet of Things device;
the terminal acting as a relay for downlink data of the Internet of Things device;
the terminal acting as a relay for data transmission of the Internet of Things device;
transmitting Internet of Things device data in a per group manner; and
the terminal acting as a relay for transmitting the Internet of Things device data in a per group manner.

14. The method according to claim 10, wherein the network-side device comprises an access and mobility management function AMF and/or a session management function SMF.

15. A session establishment method for an Internet of Things device, comprising:
obtaining, by a first network-side device, a first Internet of Things device group policy, wherein the first Internet of Things device group policy indicates that a session channel is established on a per Internet of Things device group basis; and
sending, by the first network-side device according to the first Internet of Things device group policy, a second Internet of Things device group policy to a terminal, wherein the terminal has an Internet of Things device access capability, and the second Internet of Things device group policy indicates the terminal to establish a target session channel for a target Internet of Things device going to access the terminal, on a per Internet of Things device group basis.

16. The method according to claim 15, wherein before the obtaining, by a first network-side device, a first Internet of Things device group policy, the method further comprises:
obtaining, by the first network-side device, Internet of Things device access capability information of the terminal, wherein the Internet of Things device access capability information is used to indicate that the Internet of Things device is capable of being accessed to the terminal.

17. The method according to claim 15, wherein the second Internet of Things device group policy is used to describe at least one of the following information:
establishing one target session channel for all Internet of Things devices going to access the terminal; and
establishing one target session channel for Internet of Things devices of a same type going to access the terminal.

18. The method according to claim 17, wherein the type comprises at least one of the following: a type of Internet of Things service and a type of Internet of Things device.

19. The method according to claim 18, wherein
the type of the Internet of Things service comprises at least one of the following: environmental measurement, tag tracking, and material management; and/or
the type of the Internet of Things device comprises at least one of the following: sensor and tag.

20. The method according to claim 15, wherein the second Internet of Things device group policy further comprises an establishment parameter for the target session channel.

21. The method according to claim 20, wherein the establishment parameter for the target session channel comprises at least one of the following:
first indication information, wherein the first indication information is used to indicate that the target session channel is of IP type;
second indication information, wherein the second indication information is used to indicate that the target session channel is of Ethernet type;
third indication information, wherein the third indication information is used to indicate a service continuity mode of the target session channel;
fourth indication information, wherein the fourth indication information is used to indicate that the target session channel is a control plane channel; and
fifth indication information, wherein the fifth indication information is used to indicate that the target session channel is a user plane channel.

22. The method according to claim 16, wherein the obtaining, by the first network-side device, Internet of Things device access capability information of the terminal comprises:
receiving, by the first network-side device, a first message from the terminal, wherein the first message carries the Internet of Things device access capability information, and the first message comprises one of the following: a registration message and a session establishment request message.

23. The method according to any one of claims 15 to 22, wherein the obtaining, by a first network-side device, a first Internet of Things device group policy comprises:
receiving, by the first network-side device, the first Internet of Things device group policy from a unified data management UDM and/or policy control function PCF.

24. A session establishment method for an Internet of Things device, comprising:
receiving, by a second network-side device from a first network-side device, a request for obtaining an Internet of Things device group policy; and
sending, by the second network-side device, a first Internet of Things device group policy to the first network-side device, wherein the first Internet of Things device group policy indicates that a session channel is established on a per Internet of Things device group basis.

25. The method according to claim 24, wherein the first Internet of Things device group policy is used to describe at least one of the following information:
establishing one session channel for all Internet of Things devices going to access a same terminal; and
establishing one session channel for Internet of Things devices of a same type going to access a same terminal.

26. The method according to claim 25, wherein the type comprises at least one of the following: a type of Internet of Things service type and a type of Internet of Things device.

27. The method according to claim 26, wherein the type of the Internet of Things service type comprises at least one of the following: environmental measurement, tag tracking, and material management.

28. The method according to claim 26, wherein the type of the Internet of Things device comprises at least one of the following: sensor and tag.

29. The method according to claim 24, wherein the Internet of Things device group policy further comprises an establishment parameter for a session channel.

30. The method according to claim 29, wherein the establishment parameter for a session channel comprises at least one of the following:
first indication information, wherein the first indication information is used to indicate that the session channel is of IP type;
second indication information, wherein the second indication information is used to indicate that the session channel is of Ethernet type;
third indication information, wherein the third indication information is used to indicate a service continuity mode of the session channel;
fourth indication information, wherein the fourth indication information is used to indicate that the session channel is a control plane channel; and
fifth indication information, wherein the fifth indication information is used to indicate that the session channel is a user plane channel.

31. The method according to any one of claims 24 to 30, wherein the request for obtaining an Internet of Things device group policy comprises Internet of Things device access capability information, wherein the Internet of Things device accesss capability information is used to indicate that the terminal is capable of accessing an Internet of Things device to a communication network.

32. A session establishment apparatus for an Internet of Things device, applied to a terminal, comprising:
a first obtaining module, configured to obtain an Internet of Things device group policy, wherein the Internet of Things device group policy indicates the terminal to establish a session channel on a per Internet of Things device group basis; and
an establishment module, configured to establish, according to the Internet of Things device group policy, a target session channel for a target Internet of Things device going to access the terminal.

33. The apparatus according to claim 32, wherein that the establishing, by an establishment module according to the Internet of Things device group policy, a target session channel for a target Internet of Things device going to access the terminal comprises:
obtaining a target type of the target Internet of Things device; and
establishing a target session channel for the target Internet of Things device according to the Internet of Things device group policy.

34. The apparatus according to claim 33, wherein the establishing, by an establishment module according to the Internet of Things device group policy, a target session channel corresponding to the target type for the target Internet of Things device comprises:
establishing a target session channel for the target Internet of Things device in a case that no target session channel corresponding to the target type has been established.

35. The apparatus according to claim 32, wherein the obtaining, by a first obtaining module, an Internet of Things device group policy comprises:
obtaining the Internet of Things device group policy from a network-side device.

36. The apparatus according to any one of claims 32 to 35, wherein the apparatus further comprises:
a first sending module, configured to send Internet of Things device access capability information to a network-side device, wherein the Internet of Things device access capability information is used to indicate that the terminal is capable of accessing an Internet of Things device to a communication network.

37. A session establishment apparatus for an Internet of Things device, applied to a first network-side device, comprising:
a second obtaining module, configured to obtain a first Internet of Things device group policy, wherein the first Internet of Things device group policy indicates that a session channel is established on a per Internet of Things device group basis; and
a second sending module, configured to send, according to the first Internet of Things device group policy, a second Internet of Things device group policy to a terminal, wherein the terminal has an Internet of Things device access capability, and the second Internet of Things device group policy indicates the terminal to establish a target session channel for a target Internet of Things device going to accesss the terminal, on a per Internet of Things device group basis.

38. The apparatus according to claim 37, wherein the second obtaining module is further configured to obtain Internet of Things device access capability information of the terminal, wherein the Internet of Things device access capability information is used to indicate that an Internet of Things device is capable of being accessed to the terminal.

39. The apparatus according to claim 38, wherein the obtaining, by the second obtaining module, Internet of Things device access capability information of the terminal comprises:
receiving a first message from the terminal, wherein the first message carries the Internet of Things device access capability information, and the first message comprises one of the following: a registration message and a session establishment request message.

40. The apparatus according to claim 37, wherein the obtaining, by a second obtaining module, a first Internet of Things device group policy comprises:
receiving the first Internet of Things device group policy from a unified data management UDM or policy control function PCF entity.

41. A session establishment apparatus for an Internet of Things device, applied to a second network-side device, wherein the apparatus comprises:
a receiving module, configured to receive a request for obtaining an Internet of Things device group policy from a first network-side device; and
a third sending module, configured to send a first Internet of Things device group policy to the first network-side device, wherein the first Internet of Things device group policy indicates that a session channel is established on a per Internet of Things device group basis.

42. A terminal, comprising a processor and a memory, wherein the memory stores a program or instructions executable on the processor, and when the program or instructions are executed by the processor, the steps of the session establishment method for an Internet of Things device according to any one of claims 1 to 14 are implemented.

43. A network-side device, comprising a processor and a memory, wherein the memory stores a program or instructions executable on the processor, and when the program or instructions are executed by the processor, the steps of the session establishment method for an Internet of Things device according to any one of claims 15 to 31 are implemented.

44. A readable storage medium, wherein the readable storage medium stores a program or instructions, and when the program or instructions are executed by a processor, the steps of the session establishment method for an Internet of Things device according to any one of claims 1 to 14 or the steps of the session establishment method for an Internet of Things device according to any one of claims 15 to 31 are implemented.
